# EUROPEAN PATENT APPLICATION

(11) **EP 4 814 439 A1**
(43) Date of publication of application: **30.09.2026**
(21) Application number: 25167005.5
(22) Date of filing: 28.03.2025
(51) Int. Cl.: G01C 13/00, G01C 21/16, G01C 25/00, G08G 3/00

(54) **METHODS AND SYSTEMS FOR DETERMINING WHETHER AN OBJECT IS IN A LIQUID-SURFACE-WAVE-INFLUENCED ENVIRONMENT**

(71) Applicant: Trimble Inc, Westminster CO 80021 (US)
(72) Inventor: Narasimhan, Abishek, Munich (DE); Ayres-Sampaio, Diogo, Porto (PT)
(74) Representative: Hoffmann Eitle

(57) **Abstract**

Some embodiments of the invention pertain to methods for determining whether an object is in a liquid-surface-wave-influenced environment, such as for example in a ferry. The method comprises: acquiring (s10) measurement data, here referred to as "inertial data", from an inertial measurement unit (IMU) rigidly mounted with respect to the object; determining (s20) a value, here referred to as "autocorrelation function minimum's lag value", representing a lag at which an autocorrelation function of the acquired inertial data is minimum; and determining (s30) whether the object is in a liquid-surface-wave-influenced environment based on the autocorrelation function minimum's lag value. The disclosure also relates to, without being limited to, systems (1200), vehicles, computer programs, and computer program products.

## Description

### [Field of technology]

The invention relates to, without being limited to, the field of navigation. More specifically, the fields of application of the disclosed methods, systems, and computer programs include, but are not limited to, geospatial navigation, automotive applications (including highly automated driving and autonomous driving), maritime applications, railway applications, machine guidance, civil engineering, construction, agriculture, disaster prevention and relief, and scientific research.

### [Background]

Inertial navigation systems (INS) utilizing inertial measurement units (IMU) alongside distance measuring instruments (DMI) (based for example on tachometer data) are useful to achieve continuous and reliable positioning within global navigation satellite system (GNSS)-challenged and GNSS-denied environments such as downtown urban scenarios, tunnels, and garages. By integrating INS with GNSS, the limitations inherent to each system may be addressed, to ensure seamless and accurate navigation. The synergy between, on the one hand, the IMU's capability to detect acceleration and angular rates and, on the other hand, the DMI measurement based on wheel rotation speeds and motion constraints may effectively compensate for the loss of GNSS signals, thereby enhancing the accuracy of position and attitude estimation. This integration is particularly useful for applications that demand high reliability and continuous navigation under challenging conditions.

The accuracy of inertial navigation is significantly affected by the calibration of sensors, as even minor inaccuracies in calibration of sensor bias can lead to substantial errors in position and attitude estimation. This is because INS calculates position and velocity by integrating acceleration and angular rate data from the IMU, where any sensor bias or drift directly impacts the trajectory calculation, resulting in cumulative errors over time, a phenomenon known as sensor drift.

There is a constant need for improving navigation techniques, so as to notably increase accuracy, precision, and reliability of the results, while at the same time keeping equipment costs, size, and power consumption as low as possible.

### [Summary]

The present invention aims at addressing, at least in part, the above-mentioned need. The invention includes methods, systems, computer programs, computer program products, and storage mediums as defined in the independent claims. Particular embodiments are defined in the dependent claims.

In one embodiment, a method is provided for determining whether an object is in a liquid-surface-wave-influenced environment. The method comprises: acquiring measurement data, hereinafter referred to as "inertial data", from an IMU rigidly mounted with respect to the object; determining a value, hereinafter referred to as "autocorrelation function minimum's lag value", representing a lag at which an autocorrelation function of the acquired inertial data is minimum; and determining whether the object is in a liquid-surface-wave-influenced environment based on the autocorrelation function minimum's lag value.

The method makes it possible to provide a technique for detecting whether an object is in a liquid-surface-wave-influenced environment, such as for example in a ferry buoyed by the water beneath it. Detecting this state is useful for example if the object is, or is in or on, a vehicle, since knowledge of this state can then be accounted for by the vehicle to maintain a reliable and robust navigation solution. More specifically, knowledge that a vehicle is in a liquid-surface-wave-influenced environment rather than static in an Earth-fixed frame may be useful to avoid conducting a sensor calibration procedure intended to be performed in a static state while in fact the vehicle is not static but is in a liquid-surface-wave-influenced environment, e.g. in or on a ferry.

In one embodiment, a system is provided for carrying out the above-referred method. In one embodiment, a vehicle comprises such a system.

In some embodiments, computer programs, and computer program products and storage media for storing such computer programs, are provided. Such computer programs comprise computer- and/or machine-readable instructions for carrying out, when executed on a processing unit such as one embedded in, or otherwise part of, a system as described above or in another apparatus, or when executed on a set of processing units such as a set of processing units embedded in, or otherwise part of, a set of devices of the system, the above-described operations performed by the system.

### [Brief description of the drawings]

Embodiments of the present invention shall now be described in conjunction with the appended drawings in which:
Fig. 1 is a flowchart of a method in one embodiment of the invention;
Fig. 2 is a flowchart of a method in one embodiment of the invention, including determining that an object is in a liquid-surface-wave-influenced environment based on the autocorrelation function minimum's lag value exceeding a threshold;
Fig. 3 is a flowchart of a method in one embodiment of the invention, including determining that an object is in a liquid-surface-wave-influenced environment based on a moving average of the autocorrelation function minimum's lag value over time exceeding a threshold;
Fig. 4 is a flowchart of a method in one embodiment of the invention, including determining that an object is in a liquid-surface-wave-influenced environment based on a moving average of the autocorrelation function minimum's lag value over time exceeding a first threshold, and on a moving standard deviation of the autocorrelation function minimum's lag value over time not exceeding a second threshold;
Fig. 5 is a flowchart of a method in one embodiment of the invention, including an example of entry logic condition(s) for determining whether an object has entered a state in which it is in a liquid-surface-wave-influenced environment;
Fig. 6 is a flowchart of a method in one embodiment of the invention, including an example of exit logic condition(s) for determining whether an object has exited a state in which it was in a liquid-surface-wave-influenced environment;
Fig. 7 shows horizontal gyroscope data along the roll axis over time (upper left-hand-side graph), horizontal gyroscope data along the pitch axis over time (lower left-hand-side graph), autocorrelation function (ACF) lag of roll gyroscope data (upper right-hand-side graph), and ACF lag of pitch gyroscope data (lower right-hand-side graph), to illustrate some aspects of embodiments of the invention;
Fig. 8a shows raw data of roll gyroscope axis over time (upper graph), and time lag of minima of ACF of roll gyroscope axis data over time (lower graph), to illustrate some aspects of embodiments of the invention;
Fig. 8b shows raw data of pitch gyroscope axis over time (upper graph), and time lag of minima of ACF of pitch gyroscope axis data over time (lower graph), to illustrate some aspects of embodiments of the invention;
Fig. 9 shows a simulated low-frequency gyroscope signal over time (upper graph, solid black line), a simulated low- and high-frequency gyroscope signal over time (upper graph, dashed gray line), the ACF of the low-frequency signal depending on the time lag (lower graph, solid black line), and the ACF of the low- and high-frequency signal depending on the time lag (lower graph, dashed gray line), to illustrate some aspects of embodiments of the invention;

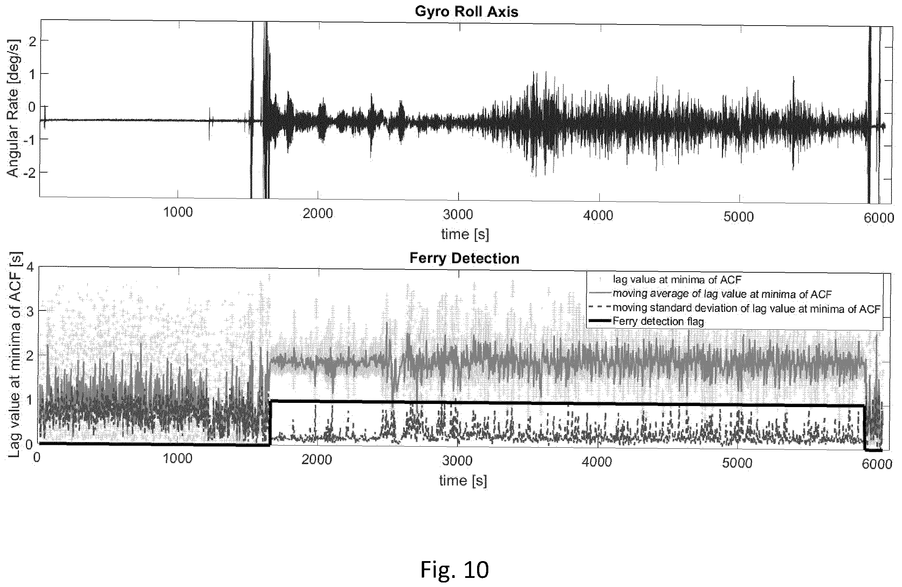

Fig. 10 shows roll axis gyroscope data over time in the context of a ferry-mode detection process (upper graph), the ACF minimum's lag value, i.e. the half-wavelength, of the roll axis gyroscope data (lower graph, '+' markers), the moving average of the lag value of ACF minimum of the roll axis gyroscope data over time (lower graph, solid gray line), the moving standard deviation of the lag value of ACF minimum of the roll axis gyroscope data over time (lower graph, dashed black line), and whether a ferry mode has been detected (lower graph, solid black line), to illustrate some aspects of embodiments of the invention;

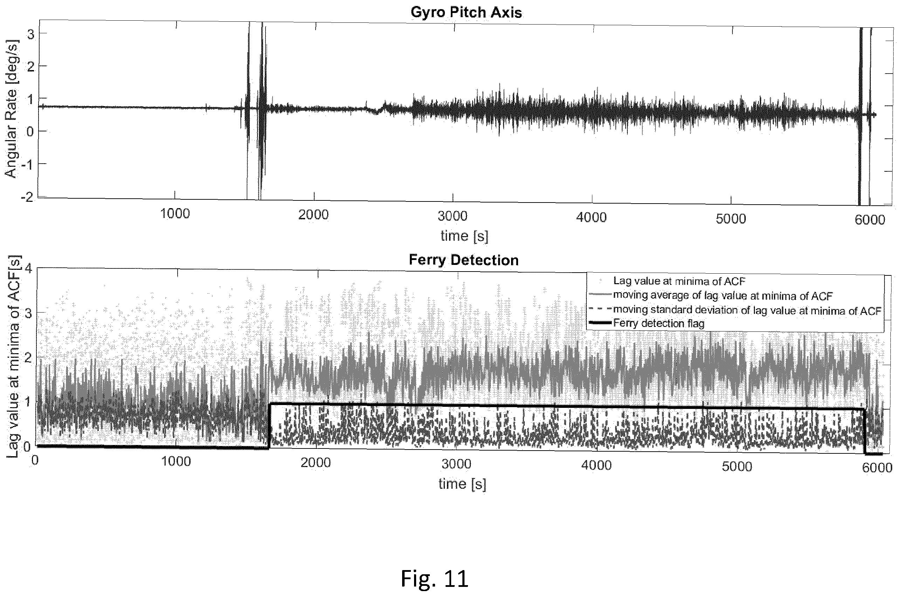

Fig. 11 shows pitch axis gyroscope data over time in the context of a ferry-mode detection process (upper graph), the ACF minimum's lag value, i.e. the half-wavelength, of the pitch axis gyroscope data (lower graph, '+' markers), the moving average of the lag value of ACF minimum of the pitch axis gyroscope data over time (lower graph, solid gray line), the moving standard deviation of the lag value of ACF minimum of the pitch axis gyroscope data over time (lower graph, dashed black line), and whether a ferry mode has been detected (lower graph, solid black line), to illustrate some aspects of embodiments of the invention;
Fig. 12 is a schematic diagram of a system in one embodiment of the invention; and
Fig. 13 is a schematic diagram showing pitch, roll, and yaw axes when considering a land vehicle, to illustrate some aspects of the invention.

### [Detailed description]

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the present description (including also the above "Background" section), the abbreviation "GNSS" is sometimes used. The disclosure is, however, not limited to global navigation satellite systems (GNSS) but also applies to regional navigation satellite systems (RNSS). Thus, it is to be understood that each occurrence of "GNSS" in the present document can be replaced with "RNSS" to form, where applicable, additional embodiments. Examples of navigation satellite systems (NSS) include the Global Positioning System (GPS) (United States), the Global'naya Navigatsionnaya Sputnikovaya Sistema (GLONASS) (Russia), Galileo (Europe), the BeiDou Navigation Satellite System (BDS) (China), the Quasi-Zenith Satellite System (QZSS) (Japan), the Indian Regional Navigation Satellite System (IRNSS, also referred to as NavIC) (systems in use or in development). In addition, the term "navigation satellite system" (NSS) is here intended to cover many types of embodiments, and those may also include embodiments involving MEO-PNT and/or LEO-PNT navigation satellite systems. An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcast signal with a receiver-side version of the code to be detected. Based on the detection of the time of arrival of the code for each of a series of satellites, the NSS receiver estimates its position. Positioning includes, but is not limited to, geolocation, i.e. the positioning on the surface of the Earth. The carrier signals transmitted by the NSS satellites can also be tracked to provide an alternative, or complementary way of determining the range, or change in range between the receiver and satellite. Carrier phase measurements from multiple NSS satellites facilitate estimation of the position of the NSS receiver. That is, for highly precise positioning, carrier phase observations may be used in addition to code measurements.

When the term "real-time" is used in the present document, it means that there is an action (e.g., data is processed, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

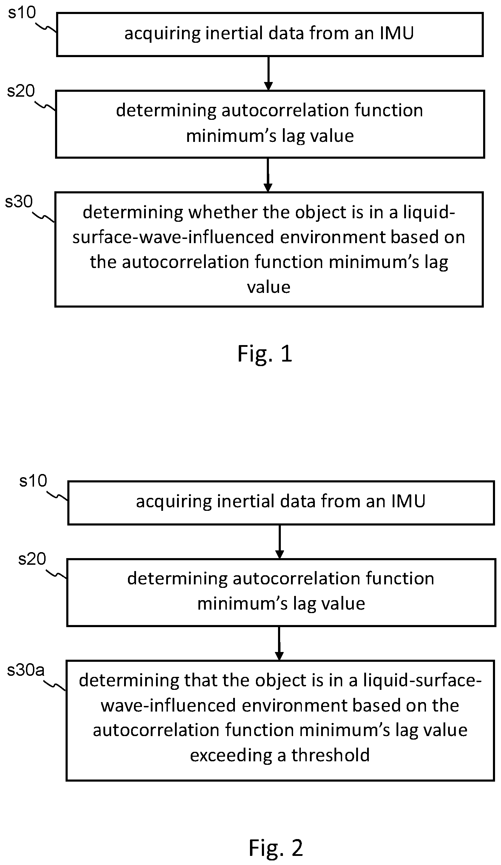

Fig. 1 is a flowchart of a method in one embodiment of the invention. The purpose of the method is to determine whether an object is in a liquid-surface-wave-influenced environment. The method may be carried out by a system comprising some form of controller(s), control unit(s), processor(s), or processing unit(s) to perform and/or coordinate the operations described below and/or to cause these operations to be performed. The controller(s), control unit(s), processor(s), or processing unit(s) may for example operate as a result of the execution of machine-readable instructions stored in a machine-readable memory. The controller(s), control unit(s), processor(s), or processing unit(s) may for example be implemented in software, hardware, a combination of software and hardware, or pre-programmed application-specific integrated circuit (ASICs).

The above-referred object may be any type of object that may be subject to motion and with respect to which an IMU can be rigidly mounted. In one embodiment, the object is one of: (i) a land vehicle, (ii) an object that can be carried by a land vehicle, and (iii) an object that can be pulled by a land vehicle. The land vehicle may for example be at least one of: a motor vehicle, a car, an automobile, a van, a truck, a tanker, a bus, a train, a motorcycle, a tractor, an agricultural equipment, an agricultural tractor, a combine harvester, a crop sprayer, a forestry equipment, a construction equipment, a grader, and an excavator. If the object is an object that can be carried by a land vehicle, the object may for example be a container such as, but without being limited to, a shipping container, an intermodal shipping container, or an intermediate bulk container. If the object is an object that can be pulled by a land vehicle, the object may for example be a trailer or a container carried on, or in, a trailer.

By "liquid-surface-wave-influenced environment", it is hereby meant an environment that is subject to motion induced by liquid surface waves. In one embodiment, the liquid-surface-wave-influenced environment is a water-surface-wave-influenced environment, which, preferably, is a ship and, more preferably, is at least one of: a transport vessel, a ferry, a barge, and a water taxi. In another embodiment, the liquid-surface-wave-influenced environment is a floating bridge. The term "liquid-surface-wave-influenced" should not be understood as meaning that the environment is necessarily only influenced by liquid surface waves. The environment may also be influenced in some cases by wind and currents. The motion induced by liquid surface waves may for example include a combination of up-and-down tilting (pitch), side-to-side tilting (roll), side-to-side swaying (yaw), vertical rising and falling (heave), forward and backward movement (surge), and lateral, i.e. side-to-side, movement (sway). These motions may occur, and often occur, simultaneously.

The method comprises the following operations, which will be described with reference to Fig. 1.

In operation s10, measurement data, hereby referred to as "inertial data", is acquired from an IMU rigidly mounted with respect to the object. The IMU may for example be rigidly mounted with respect to a frame of the object. If the object is a land vehicle, the IMU may be rigidly mounted to the vehicle frame, e.g. the vehicle chassis, to detect and measure its motion. In one embodiment, the IMU is part of an INS. An INS is a three-dimensional dead-reckoning navigation system comprising at least a navigation processor and an IMU (see, e.g., ref. [1], pp. 7-8, section 1.2 - note: a list of references is provided at the end of the description, together with a list of abbreviations). An IMU comprises at least three mutually orthogonal accelerometers and three gyroscopes. In one embodiment, inertial data from the IMU is acquired at a rate in the range from 4 Hz to 2000 Hz, for example 5, 10, or 15 Hz, without interruption. The rate of acquisition may be equal to the sampling rate of the IMU. A low rate of acquisition, such as a rate equal to or smaller than 15 Hz, is advantageous to reduce computation and memory usage.

The acquisition of the inertial data by the system carrying out the method may for example involve any type of wired or wireless data transmission such as, without being limited to, wireless transmissions based on Bluetooth, Wi-Fi, or Li-Fi. In one embodiment, the data is transmitted in real-time, i.e. as soon as available (in line with the above-mentioned definition of the term "real-time"). This applies to all other parts of the present disclosure, too.

The inertial data comprises all, or some, data produced and output by the IMU, i.e. representing measured linear acceleration along the longitudinal, transverse, and vertical axes of the IMU and representing measured rotational rates (measured angular velocity) around the longitudinal, transverse, and vertical axes of the IMU, or any other data acquired from the IMU and representing the object's motion. In one embodiment, the acquired inertial data comprises part of all the data produced and output by the IMU. In one embodiment, the object is a land vehicle and the acquired inertial data comprises data representing measured rotational rate around a single axis of the gyroscopes of the IMU, such as the roll axis of the gyroscope. In other words, in this embodiment, the acquired inertial data comprises one channel out of six channels of the IMU.

In operation s20, a value, hereby referred to as "autocorrelation function minimum's lag value", representing a lag, i.e. a time lag, at which an autocorrelation function (ACF) of the acquired inertial data (acquired in operation s10) is minimum, i.e. reaches its minimum, is determined. The lag is the delay or shift applied to the acquired inertial data when comparing it to itself in the ACF. Determining the ACF minimum's lag value allows to determine the half wavelength of the dominant oscillating motion (i.e., the dominant sine wave), if any, which the object is subject to. The ACF of the acquired inertial data may be obtained by comparing the acquired inertial data with successive delayed versions of itself, based on buffered, acquired data.

If the inertial data comprises data from more than one channel (e.g., 2, 3, 4, 5, or 6 channels from the IMU), the method may, in one embodiment, be run separately on each of the plurality of channels and it may then be determined that the object is in a liquid-surface-wave-influenced environment if the liquid-surface-wave-influenced-environment conditions are met in one of the plurality of channels. Alternatively, in another embodiment, the inertial data from the plurality of channels may be combined as long as no useful information is lost. In this respect, see also the description provided below with reference to Figs. 10 and 11.

In operation s30, it is determined whether the object is, i.e. is estimated to be, in a liquid-surface-wave-influenced environment based on the ACF minimum's lag value (determined in operation s20). The ACF minimum's lag value reflects characteristics of the oscillating, e.g. rocking, motion the object is subject to. The output of the method may for example comprise information indicating whether the object is, i.e. is estimated to be, in a liquid-surface-wave-influenced environment. That information may for example be used by other processing elements, other processing parts of the system, and/or other processing systems, such as to, without being limited to, determine whether or not to initiate a sensor calibration process or to choose a suitable dynamic model based on detected environment (the dynamic model may for example be used in a Kalman filter).

The method indeed makes it possible to provide a technique for detecting, i.e. estimating, whether an object is in a liquid-surface-wave-influenced environment, such as for example in a ferry buoyed by the water beneath it. Detecting this state is useful for example if the object is, or is in or on, a land vehicle, since knowledge of this state can then be accounted for by the land vehicle to maintain a reliable and robust navigation solution. More specifically, knowledge that a land vehicle is in a liquid-surface-wave-influenced environment rather than static in an Earth-fixed frame may for example be useful to avoid conducting sensor calibration procedures intended to be performed in a static state while in reality the land vehicle is not static but is in a liquid-surface-wave-influenced environment, e.g. in or on a ferry.

Sensor biases are typically estimated and corrected using, for example, a Kalman filter. The Kalman filter integrates data from various sensors to estimate the object's or land vehicle's state, modeling the system's behavior and adjusting the calibration bias states of the sensors by comparing predicted position, velocity states against actual measurements from GNSS and DMI, thereby continuously refining the estimates to minimize error.

However, low-cost DMI, often used in the automotive industry, present limitations such as deadbands that do not register minor movements, poor incremental position resolution that impacts distance measurement accuracy, and ghost pulses that falsely indicate motion when the vehicle is stationary.

The process of predicting IMU sensor biases with a Kalman filter can be slow, with the accuracy of convergence heavily reliant on the precision of applied corrections and the dynamic range covered by these measurements. These corrections are derived from the discrepancies between predicted and observed measurements. Inaccurate corrections can hinder the Kalman filter's ability in estimating sensor biases accurately and quickly, potentially leading to extended convergence times and inaccurate navigation solutions.

Nonetheless, leveraging knowledge of vehicle dynamics, particularly in automobiles, and the ability to reliably detect when the vehicle is stationary, can significantly improve the performance of the Kalman filter. Stationary periods offer a valuable opportunity to monitor sensor outputs under controlled conditions, attributing any detected sensor motion to biases rather than actual vehicle movement. Incorporating this environmental detection into the Kalman filter facilitates more accurate and quicker convergence of the IMU bias states. By effectively utilizing these stationary periods for calibration, the filter can adjust sensor bias estimates more rapidly and confidently, resulting in enhanced overall system accuracy. The method described with reference to Fig. 1 aims at reliably detecting that the object, which may be a land vehicle, is not stationary but that it is rather in a liquid-surface-wave-influenced environment.

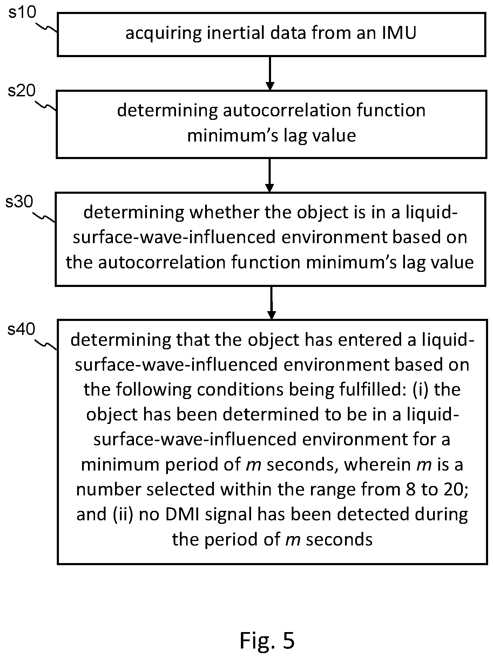

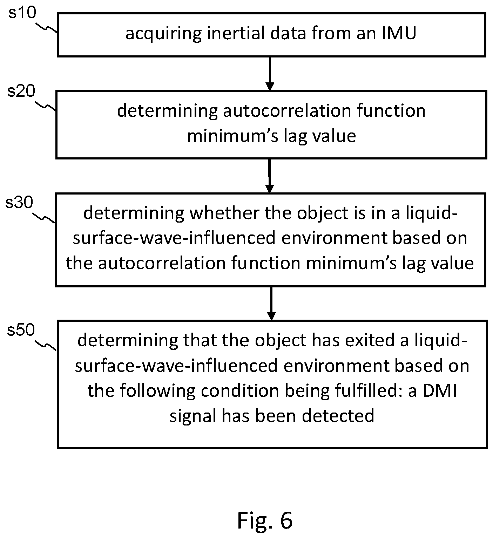

The above is applicable in particular to obtain reliable static, i.e. stationary, detections to avoid false static state detections when a land vehicle is on a ferry. Applying static corrections in such scenarios can cause disturbances, as the ferry exhibits yaw and drift behaviors not typical of cars. This ferry motion can be inadvertently absorbed by the filter. An IMU on a ferry experiences wave-induced motion in the tilt gyroscopes. In automotive applications, tilt gyroscope measurements are generally limited to suspension motion, engine vibration, and Gaussian white noise. On a ferry, however, the wave motion typically manifests as a single long-wavelength signal with a low signal-to-noise ratio (SNR). The index, i.e. the time lag, of the minima of the ACF reliably and robustly tracks the half-wavelength of the low-frequency signal, even in the presence of higher-frequency vibrations. This band-specific measurement of the signal in tilt gyroscopes, optionally combined with entry and exit logic (as will be discussed further with reference to Figs. 5 and 6), may be used to determine, i.e. estimate, when a vehicle is on a ferry.

In one embodiment (not illustrated in Fig. 1), the method further comprises, after determining s30 that the object is in a liquid-surface-wave-influenced environment, refraining, for example for a given period of time, from carrying out and/or from initiating a sensor calibration process.

Fig. 2 is a flowchart of a method in one embodiment of the invention, wherein determining s30 whether the object is in a liquid-surface-wave-influenced environment based on the ACF minimum's lag value comprises: determining s30a that the object is in a liquid-surface-wave-influenced environment based on the ACF minimum's lag value exceeding a threshold. That is, if it is determined that the ACF minimum's lag value exceeds the threshold, the object is determined s30a to be in a liquid-surface-wave-influenced environment. In one embodiment, the threshold corresponds to a value of n seconds, and *n* is a number greater than or equal to 1, preferably a number selected from the range from 1 to 1000, most preferably a number selected from the range from 1 to 5. The number 1000 is well within the upper limit for natural frequency of oscillation on ocean (see for example ref. [2]). The object is therefore determined to be in a liquid-surface-wave-influenced environment if the frequency of detected motion is low, preferably below a value selected in the range from 1 Hz to 0.001 Hz. A mostly monochromatic noise is characteristic of a liquid-surface-wave-influenced environment such as for example a ferry.

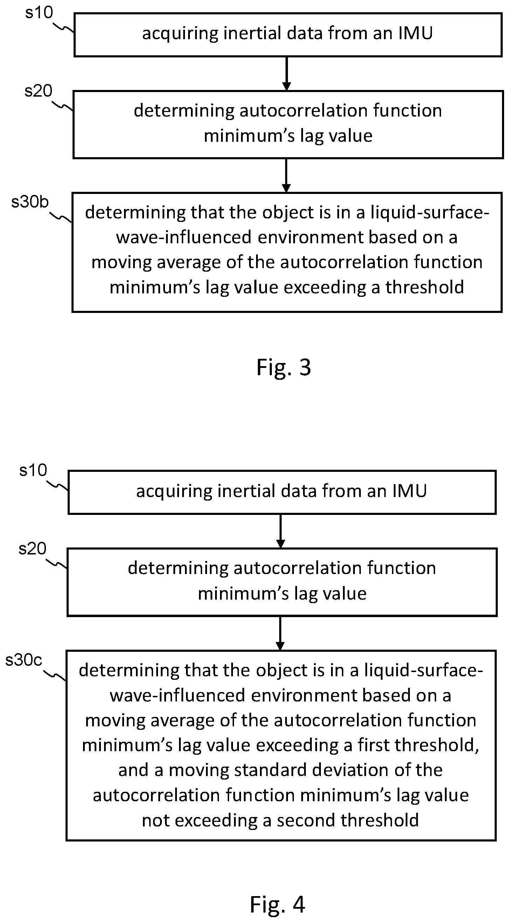

Fig. 3 is a flowchart of a method in one embodiment of the invention, wherein determining s30 whether the object is in a liquid-surface-wave-influenced environment based on the ACF minimum's lag value comprises: determining s30b that the object is in a liquid-surface-wave-influenced environment based on a moving average of the ACF minimum's lag value over time exceeding a threshold. That is, if it is determined that a moving average of the ACF minimum's lag value over time exceeds the threshold, the object is determined s30b to be in a liquid-surface-wave-influenced environment. In other words, the index, i.e. the time lag, of the minima of the ACF may be tracked and smoothed using a moving average filter. The duration of the moving average window may for example be 4 seconds, although other values may be used as well. The value of the threshold may be the same as the value discussed with reference to Fig. 2, i.e. it may correspond to a value of n seconds, with *n* being a number greater than or equal to 1, preferably a number selected from the range from 1 to 1000, most preferably a number selected from the range from 1 to 5.

Fig. 4 is a flowchart of a method in one embodiment of the invention, wherein determining s30 whether the object is in a liquid-surface-wave-influenced environment based on the ACF minimum's lag value comprises: determining s30c that the object is in a liquid-surface-wave-influenced environment based on (i) a moving average of the ACF minimum's lag value over time exceeding a first threshold, and (ii) a moving standard deviation of the ACF minimum's lag value over time not exceeding a second threshold. That is, if it is determined that a moving average of the ACF minimum's lag value over time exceeds a first threshold and also that a moving standard deviation of the ACF minimum's lag value over time does not exceed a second threshold, the object is then determined s30c to be in a liquid-surface-wave-influenced environment. The duration of the moving average window and that of the moving standard deviation are the same (i.e., same buffer length and done with same duration) and may for example be both equal to 4 seconds, although other values may be used as well. In other words, the index, i.e. the time lag, of the minima of the ACF may be tracked and smoothed using a moving average filter, and changes in the minima index of the ACF over the last window is used to calculate the standard deviation of the smoothed minima index of the ACF.

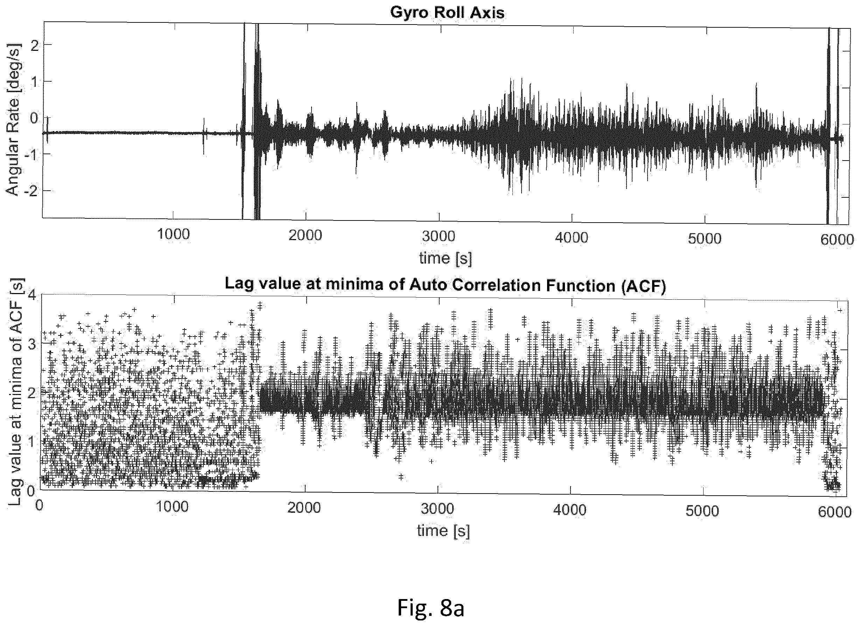

In one embodiment, a moving average of the lag value of minima of the ACF over a p-second window, with p being a value in the range from 1 to 100, for example 4, is used along with the standard deviation of the lag values of these minima over the same period. This approach leverages two useful criteria for detecting that the object is in a liquid-surface-wave-influenced environment: low standard deviation and low-frequency motion in, for example, horizontal gyroscopes (tilt gyroscopes). A low standard deviation indicates high confidence in the periodicity of the detected signal, suggesting that the signal is consistent and not heavily influenced by other wavelengths. Concurrently, the moving average of the lag value of the ACF minima over time is, in one embodiment, less than 1 Hz, which aligns with the characteristic low-frequency motion of, for example, a ferry. In other words, when the object, which may be a land vehicle, is truly static, the measured signal is Gaussian white noise along with any sensor biases. Performing ACF on Gaussian white noise within a finite window results in minima that are arbitrary (i.e., random, change unpredictably; see Figs. 8a, 8b, 10, and 11 before time 1500 [s]) in each epoch, leading to a large standard deviation of the lag of the ACF minima, which is easily detectable. This property of ACF is useful for reliably distinguishing a low-frequency signal from Gaussian white noise, especially when the SNR is low or very low. Therefore, the standard deviation condition aims at generally ensuring a confident detection of a motion characteristic of a liquid-surface-wave-influenced environment.

In some embodiments, determining s30, s30a, s30b, s30c whether the object is in a liquid-surface-wave-influenced environment, such as for example in or on a ferry, is a punctual assessment in that, once the determination is positive, some resulting action(s) is or are taken (or not taken), such as for example refraining from carrying out and/or from initiating a sensor calibration process for a given period of time. Alternatively, in some embodiments, as will be described further with reference to Figs. 5 and 6, additional condition(s) may be evaluated, i.e. additional logic may be used, before proceeding with taking (or not taking) action(s), and, in particular, fulfilling the additional condition(s) may lead to a determination that the object has entered or, to the contrary, has exited a state in which the object is in a liquid-surface-wave-influenced environment.

The liquid-surface-wave-influenced environment entry and exit conditions may be done by tracking the moving average and moving standard deviation of the lag value of the minima of the ACF (dominant lag) over a p-second window with data decimated at, for example, 5 Hz. A low standard deviation value corresponds to absence of dominant peaks from other wavelengths in the last p-second period, and a large mean corresponds to a large dominant half-wavelength to be measured for the liquid-surface-wave-influenced environment detection.

Fig. 5 is a flowchart of a method in one embodiment of the invention, further comprising, after operations s10, s20, and s30 as described with reference to Fig. 1, or as described with reference to any of Figs. 2, 3, and 4, i.e. comprising any of operations s30a, s30b, and s30c respectively: determining s40 that the object has entered a liquid-surface-wave-influenced environment based on the following conditions being fulfilled: (a) the object has been determined to be in a liquid-surface-wave-influenced environment for a minimum period of m seconds, wherein m is a number selected within the range from 8 to 20, e.g. 10 seconds; and (b) no DMI signal has been detected during the period of m seconds (i.e., if the object is a land vehicle, no rotation of the vehicle's wheels has been detected).

In other words, to enter liquid-surface-wave-influenced environment mode, detection condition (a) is to be met for a duration of m seconds. The duration of the minimum period of positive determination "being in a liquid-surface-wave-influenced environment = yes", i.e. the above-referred value m, can be tuned based on reliability of the instruments. Additionally, according to condition (b), no DMI (e.g. from a tachometer) signal is to be measured during this period, reinforcing the assumption that the object, which may be a land vehicle, is in a liquid-surface-wave-influenced environment and not moving by itself. This ensures that the system accurately identifies the liquid-surface-wave-influenced environment's (e.g., ferry's) slow and subtle movements without mistaking them for static conditions.

Fig. 6 is a flowchart of a method in one embodiment of the invention, further comprising, after operations s10, s20, and s30 as described with reference to Fig. 1, or as described with reference to any of Figs. 2, 3, and 4, i.e. comprising any of operations s30a, s30b, and s30c respectively, and after having entered a liquid-surface-wave-influenced environment: determining s50 that the object has exited a liquid-surface-wave-influenced environment based on the following condition being fulfilled: a DMI signal has been detected.

Exiting the liquid-surface-wave-influenced environment mode may also be triggered if the liquid-surface-wave-influenced environment detection conditions are not met for 10 consecutive seconds. Alternatively, the presence of DMI signals at any point in time may also prompt an exit from liquid-surface-wave-influenced environment mode, as this indicates that the land vehicle is moving independently, i.e. by itself, and not only as a result of being in a liquid-surface-wave-influenced environment. In this context, it is desirable that the DMI signals be reliable DMI signals, so that a ghost pulse (which tends to be quantisation noise from not grounding the line properly, so that ghost pulses are usually 1 or 0) from a hypothetical, non-reliable DMI does not lead to the exit condition being fulfilled. Alternatively, having a minimum tachometer speed condition (which may require a multitude of pulses) may be used for a DMI-signal-based exit condition. This dual-criteria approach is generally advantageous to ensure that the system promptly and accurately responds to changes in the vehicle's motion state.

While in liquid-surface-wave-influenced environment mode, static corrections to observed sensor biases are, in one embodiment, suspended to avoid poor filter convergence that may result from misinterpreting the influence of the liquid-surface-wave-influenced environment, e.g. the ferry's motion. Once the system exits liquid-surface-wave-influenced environment mode, static corrections to observed sensor biases are allowed to be applied to ensure accurate motion detection and filter performance. This methodology is generally advantageous to ensure robust performance in dynamic environments, maintaining accurate detection and response to liquid-surface-wave-influenced environment conditions, e.g. to ferry conditions.

In one embodiment, the DMI signal is, or comprises, at least one of: a tachometer signal, and a delta distance measurement signal from a camera.

In one embodiment, the acquired inertial data is stored in a ring buffer data structure, which may also be called "rolling data buffer", "circular buffer", or "cyclic buffer". Tracking the harmonic of the inertial data requires a buffer length at least a little longer than half wavelength to be tracked. Using a ring buffer data structure is advantageous for efficient data storage management.

In one embodiment, liquid-surface-wave-influenced environment detection, such as on-ferry state detection, is carried out only in the absence of DMI measurements.

As explained above, determining that an object, such as a land vehicle, is in a liquid-surface-wave-influenced environment, such as on or in a ferry, is useful to avoid conducting sensor calibrations in such a non-static environment. When monitoring a liquid-surface-wave-influenced environment mode, such as an on-ferry mode, using IMUs, sensors often capture a combination of low-frequency sinusoidal wave motion and noise. The magnitude of this motion is typically very small, which can be easily mistaken for static conditions. Applying static corrections in such scenarios can result in poor filter convergence, as the ferry, or the like, generally moves and yaws slowly unlike a car, making these motions difficult to detect and distinguish from true static conditions. Therefore, if the presence of a liquid-surface-wave-influenced environment mode, such as an on-ferry mode, is detected, it is useful to avoid applying static corrections until there is high confidence that the vehicle has exited the wave-influenced environment. This approach generally ensures more accurate motion detection and improved filter performance.

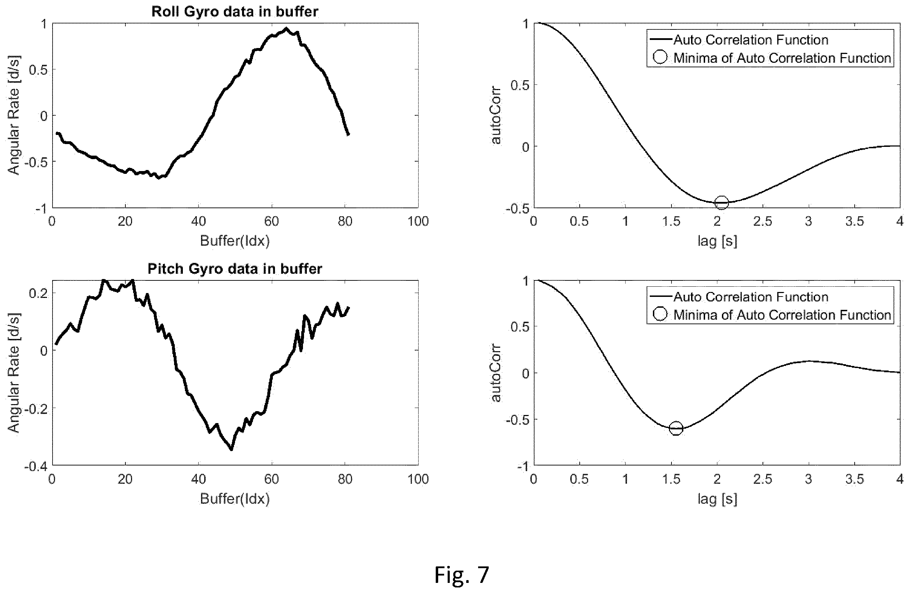

Monitoring the motion of a ferry, or the like, generally reveals distinct patterns in roll and pitch rotations, especially due to the wave-induced motion. As the ferry, or the like, moves due to waves, the IMU sensors capture the low-frequency (smaller than or equal to 1 Hz) oscillations corresponding to the wave motion. The roll and pitch rotations measured by the IMU reflect the cyclical nature of the waves, with the accelerations peaking as the ferry, or the like, ascends and descends the wave crests and troughs. Utilizing the ACF is particularly effective in tracking this wave motion, as it highlights the periodicity of the signal by correlating the signal with delayed versions of itself. As long as the wave motion dominates over time-uncorrelated noise, the ACF exhibits clear peaks and troughs corresponding to the wave's frequency. Notably, the minima in the ACF (see "Auto Correlation Function" in Fig. 7) align with the 180-degree phase shifts of the wave, generally providing a reliable method to track the wave's periodic influence on the motion of the ferry, or the like, with a data buffer that only needs to be half as long as the time taken to complete one complete sinusoidal motion.

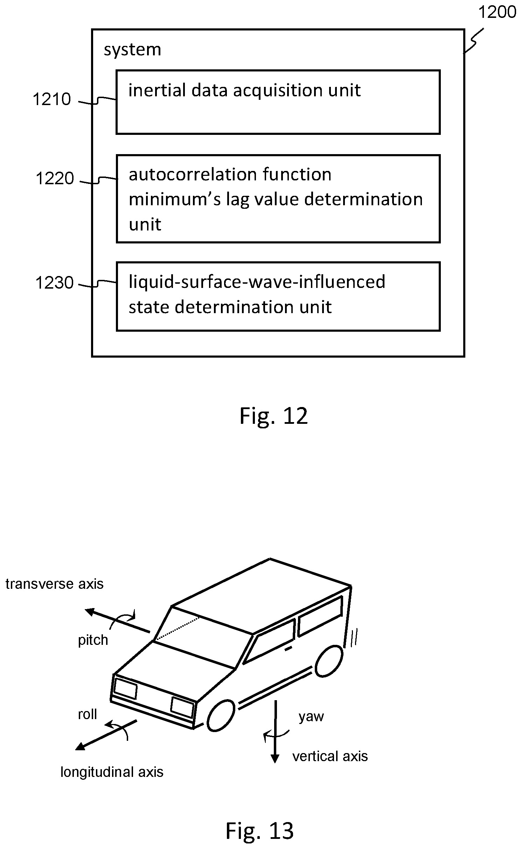

In this context, Fig. 7 shows horizontal roll gyroscope data over time (upper left-hand-side graph), horizontal pitch gyroscope data over time (lower left-hand-side graph), ACF lag of roll gyroscope data (upper right-hand-side graph), and ACF lag of pitch gyroscope data (lower right-hand-side graph), to illustrate some aspects of embodiments of the invention. On the right-hand side of Fig. 7, the ACF minimum's lag values are larger than 1 second, which may be the threshold (as discussed with reference to Fig. 1) to determine s30 that the object is in a liquid-surface-wave-influenced environment. Regarding the meaning of roll and pitch, see for example Fig. 13 when considering a land vehicle.

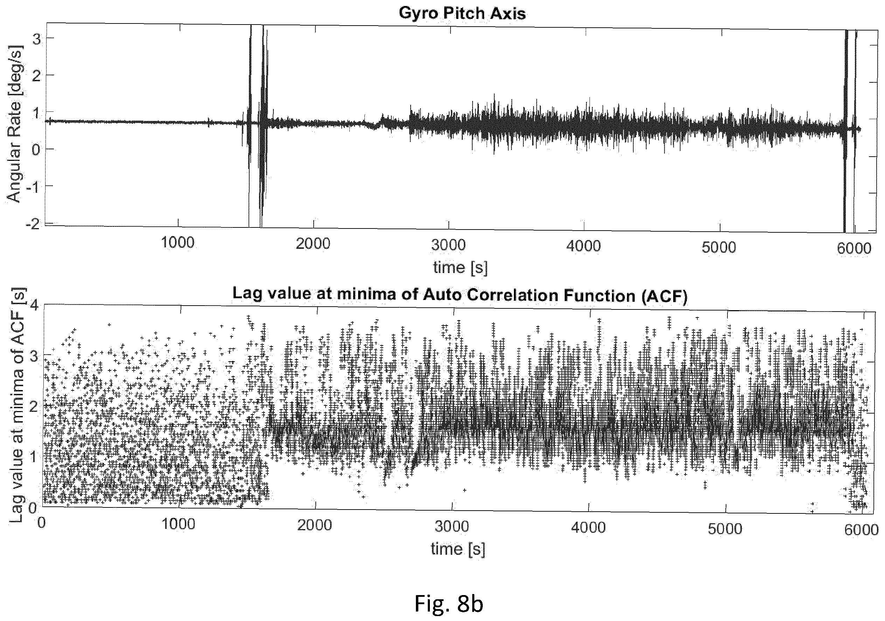

Fig. 8a shows raw data of gyroscope roll axis over time (upper graph), and time lag of minima of ACF of gyroscope roll axis data over time (lower graph), to illustrate some aspects of embodiments of the invention. After about 25 minutes (i.e., approximately 1500 seconds), the object enters a liquid-surface-wave-influenced environment. This is reflected in the half wavelength of the angular rate, as illustrated in the lower part of Fig. 8a, and the half wavelength of the angular rate may be detected based on the ACF minimum's lag value. Similarly, Fig. 8b shows raw data of gyroscope pitch axis over time (upper graph), and time lag of minima of ACF of gyroscope pitch axis data over time (lower graph), to illustrate some aspects of embodiments of the invention.

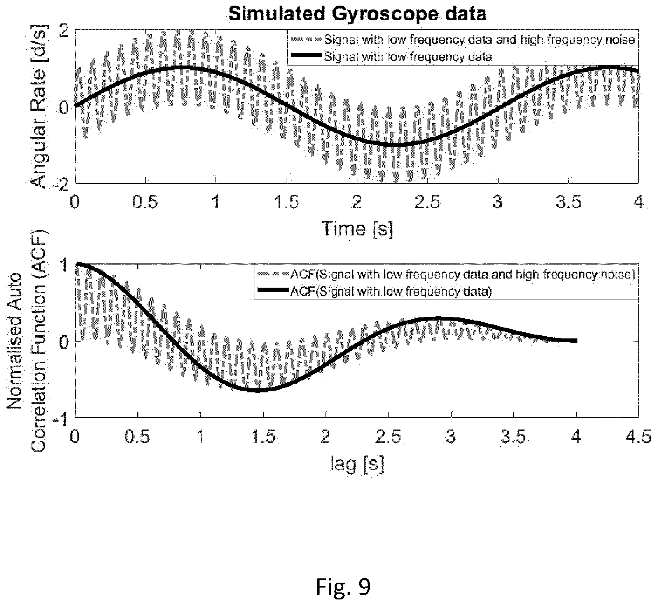

The ACF is generally more robust than the power spectral density (PSD) in detecting low-frequency signals under conditions of high-frequency vibrations. This robustness stems from the ACF's ability to highlight periodicities in the signal by correlating the signal with delayed versions of itself, effectively filtering out high-frequency noise. High-frequency vibrations tend to introduce noise that can obscure the true low-frequency components in the PSD analysis, making it challenging to distinguish between the signal and noise. In contrast, the ACF inherently emphasizes the repetitive nature of the low-frequency signal, as high-frequency components tend to cancel out over the correlation intervals. Moreover, the ACF's dominant peaks and troughs correspond to the periodicity of the low-frequency signal, providing clear indicators of its presence even in the midst of high-frequency noise. This is illustrated by Fig. 9, which shows a simulated low-frequency gyroscope signal over time (upper graph, solid black line), a simulated low- and high-frequency gyroscope signal over time (upper graph, dashed gray line), the ACF of the low-frequency signal depending on the time lag (lower graph, solid black line), and the ACF of the low- and high-frequency signal depending on the time lag (lower graph, dashed gray line). It can be noted that the tracked minima time lag in presence of higher frequency noise does not obscure the low frequency component in Fig. 9.

Figs. 10 and 11 are further provided to illustrate how a liquid-surface-wave-influenced environment may be detected in some embodiments of the invention.

Specifically, Fig. 10 shows roll axis gyroscope data over time in the context of a ferry-mode detection process (upper graph), the lag value of ACF minimum, i.e. the half-wavelength, of the roll axis gyroscope data (lower graph, '+' markers), the moving average of the lag value of ACF minimum of the roll axis gyroscope data over time (lower graph, solid gray line), the moving standard deviation of the lag value of ACF minimum of the roll axis gyroscope data over time (lower graph, dashed black line), and whether a ferry mode has been detected (lower graph, solid black line).

Fig. 11 shows pitch axis gyroscope data over time in the context of a ferry-mode detection process (upper graph), the lag value of ACF minimum, i.e. the half-wavelength, of the pitch axis gyroscope data (lower graph, '+' marker), the moving average of the lag value of ACF minimum of the pitch axis gyroscope data over time (lower graph, solid gray line), the moving standard deviation of the lag value of ACF minimum of the pitch axis gyroscope data over time (lower graph, dashed black line), and whether a ferry mode has been detected (lower graph, solid black line).

Regarding Figs. 10 and 11, the process may be as follows: data is collected, i.e. acquired (see above-described operation s10), from the roll and pitch channels separately, autocorrelation is performed on each channel independently, and the lag value of the ACF minima is obtained for both channels (see above-described operation s20). The moving average and standard deviation are then calculated for each channel (see above-described operation s30c). If the liquid-surface-wave-influenced-environment conditions (i.e., the threshold-based conditions) are met in one of the two channels, it is determined that the object is in a liquid-surface-wave-influenced environment.

Alternatively, it is possible to combine data from multiple channels and perform ACF on the combined data. This is feasible as long as the combination does not skew the data or result in a loss of information.

Fig. 12 schematically illustrates, in accordance with one embodiment of the invention, a system 1200 comprising a device or a set of devices. System 1200 is for determining whether an object is in a liquid-surface-wave-influenced environment. System 1200 comprises an inertial data acquisition unit 1210, an autocorrelation function minimum's lag value determination unit 1220, and a liquid-surface-wave-influenced state determination unit 1230. Inertial data acquisition unit 1210 is configured for performing operation s10 as described above with reference to Fig. 1, autocorrelation function minimum's lag value determination unit 1220 is configured for performing operation s20 as described above with reference to Fig. 1, and liquid-surface-wave-influenced state determination unit 1230 is configured for performing operation s30 as described above with reference to Fig. 1.

In one embodiment, a vehicle comprises a system 1200 as described above. The vehicle may for example be at least one of: a motor vehicle, a car, an automobile, a van, a truck, a tanker, a bus, a train, a motorcycle, a tractor, an agricultural equipment, an agricultural tractor, a combine harvester, a crop sprayer, a forestry equipment, a construction equipment, a grader, an excavator, an autonomous vehicle, a self-driving vehicle, a driverless vehicle, a robotic vehicle, a highly automated vehicle, and a partially automated vehicle.

In one embodiment, the IMU is provided in the vehicle, and system 1200, although capable of receiving data from the IMU, does not comprise the IMU. In other words, the IMU can be external to system 1200, provided that the IMU is rigidly mounted with respect to the object, as mentioned above.

Any of the above-described methods and their embodiments may be implemented, at least partially, by means of a computer program or a set of computer programs. The computer program(s) may be loaded on a system, apparatus and/or device, such as for example a control unit, an aided inertial navigation system (AINS) device, or an NSS receiver (running for example within a vehicle). Therefore, the invention also relates, in some embodiments, to a computer program or set of computer programs, which, when carried out on a system, apparatus and/or device as described above, such as for example a control unit, an AINS device, or an NSS receiver (running for example within a vehicle), carries out any one of the above-described methods and their embodiments.

The invention also relates, in some embodiments, to a computer-readable medium, a machine-readable medium, or a computer-program product including the above-mentioned computer program. The computer-readable medium, machine-readable medium, or computer-program product may for instance be a magnetic tape, an optical memory disk, a magnetic disk, a magneto-optical disk, an SSD, a CD-ROM, a DVD, a CD, a flash memory unit, a hard drive, or other storage devices, wherein the computer program is permanently, non-transitorily, or temporarily stored. In some embodiments, a computer-readable medium (or a computer-program product) has computer-executable instructions for carrying out any one of the methods of the invention.

In one embodiment, a computer program as claimed may be delivered to the field as a computer program product, for example through a firmware or software update to be installed on vehicles, devices, and/or receivers already in the field. This applies to each of the above-described methods and apparatuses.

As mentioned above, a NSS receiver comprises one or a plurality of antennas configured to receive NSS signals at the frequencies broadcast by the NSS satellites, and a NSS receiver may further comprise processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "inertial data acquisition unit", "autocorrelation function minimum's lag value determination unit", and "liquid-surface-wave-influenced state determination unit", etc. are used herein as units (or sub-units) of an apparatus or system, no restriction is made regarding how distributed the constituent parts of a unit (or sub-unit) may be. That is, the constituent parts of a unit (or sub-unit) may be distributed in different software and/or hardware components or devices for bringing about the intended function. Further, the units may be gathered together for performing their functions by means of a combined, single unit (or sub-unit).

Some of the above-mentioned units and sub-units may be implemented at least in part using hardware, software, a combination of hardware and software, pre-programmed ASICs, etc. A unit may include a CPU, a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

### Abbreviations:

- ACF: autocorrelation function
- AINS: aided inertial navigation system
- ASIC: application-specific integrated circuit
- BDS: BeiDou Navigation Satellite System
- CD: compact disc
- CD-ROM: compact disk read-only memory
- CPU: central processing unit
- DMI: distance measuring instrument
- DVD: digital versatile disc
- GLONASS: Global'naya Navigatsionnaya Sputnikovaya Sistema
- GNSS: global navigation satellite system
- GPS: Global Positioning System
- I/O: input/output
- IMU: inertial measurement unit
- INS: inertial navigation system
- IRNSS: Indian Regional Navigation Satellite System
- LEO-PNT: Low Earth Orbit-Positioning, Navigation and Timing
- MEO-PNT: Medium Earth Orbit-Positioning, Navigation, and Timing
- NavIC: Navigation with Indian Constellation
- NSS: navigation satellite system
- PSD: power spectral density
- QZSS: Quasi-Zenith Satellite System
- RAM: random-access memory
- ref.: reference
- RNSS: regional navigation satellite system
- ROM: read-only memory
- SNR: signal-to-noise ratio
- SSD: solid-state disk

### References:

[1] Groves, Paul D. (2008), "Principles of GNSS, Inertial, and Multisensor Integrated Navigation Systems", Artech House, ISBN 978-1-58053-255-6.
[2] Truong, H. V. P. "Natural Frequencies of Oscillations of Oceans and Frequencies of Tsunamis." Proc. 15th World Conference on Earthquake Engineering (15WCEE). 2012.

## Claims

1. Method for determining whether an object is in a liquid-surface-wave-influenced environment, the method comprising:
acquiring (s10) measurement data, hereinafter referred to as "inertial data", from an inertial measurement unit, hereinafter referred to as "IMU", rigidly mounted with respect to the object;
determining (s20) a value, hereinafter referred to as "autocorrelation function minimum's lag value", representing a lag at which an autocorrelation function of the acquired inertial data is minimum; and
determining (s30) whether the object is in a liquid-surface-wave-influenced environment based on the autocorrelation function minimum's lag value.

2. Method of claim 1, wherein determining (s30) whether the object is in a liquid-surface-wave-influenced environment based on the autocorrelation function minimum's lag value comprises: determining (s30a) that the object is in a liquid-surface-wave-influenced environment based on the autocorrelation function minimum's lag value exceeding a threshold.

3. Method of claim 2, wherein the threshold corresponds to a value of n seconds, and *n* is a number greater than or equal to 1, preferably a number selected from the range from 1 to 1000.

4. Method of claim 1, wherein determining (s30) whether the object is in a liquid-surface-wave-influenced environment based on the autocorrelation function minimum's lag value comprises: determining (s30b) that the object is in a liquid-surface-wave-influenced environment based on a moving average of the autocorrelation function minimum's lag value over time exceeding a threshold.

5. Method of claim 1, wherein determining (s30) whether the object is in a liquid-surface-wave-influenced environment based on the autocorrelation function minimum's lag value comprises: determining (s30c) that the object is in a liquid-surface-wave-influenced environment based on
a moving average of the autocorrelation function minimum's lag value over time exceeding a first threshold, and
a moving standard deviation of the autocorrelation function minimum's lag value over time not exceeding a second threshold.

6. Method according to any one of claims 2 to 5, further comprising:
determining (s40) that the object has entered a liquid-surface-wave-influenced environment based on the following conditions being fulfilled:
the object has been determined to be in a liquid-surface-wave-influenced environment for a minimum period of m seconds, wherein m is a number selected within the range from 8 to 20; and
no distance measurement instrument signal has been detected during the period of m seconds.

7. Method according to any one of claims 2 to 6, further comprising:
determining (s50) that the object has exited a liquid-surface-wave-influenced environment based on the following condition being fulfilled: a distance measurement instrument signal has been detected.

8. Method of claim 6 or 7, wherein the distance measurement instrument signal is, or comprises, at least one of:
a tachometer signal, and
a delta distance measurement signal from a camera.

9. Method according to any one of the preceding claims, wherein the object is one of:
a land vehicle;
an object that can be carried by a land vehicle; and
an object that can be pulled by a land vehicle.

10. Method according to any one of the preceding claims, wherein the liquid-surface-wave-influenced environment is a water-surface-wave-influenced environment, which, preferably, is at least one of: a ship and a floating bridge, and, more preferably, is at least one of: a transport vessel, a ferry, a barge, and a water taxi.

11. Method according to any one of the preceding claims, wherein the acquired inertial data is stored in a ring buffer data structure.

12. Method according to any one of the preceding claims, further comprising, after determining that the object is in a liquid-surface-wave-influenced environment, refraining from carrying out and/or from initiating a sensor calibration process, wherein, preferably, refraining means refraining for a given period of time.

13. System (1200), comprising a device or a set of devices, for determining whether an object is in a liquid-surface-wave-influenced environment, the system (1200) being configured for:
acquiring measurement data, hereinafter referred to as "inertial data", from an inertial measurement unit, hereinafter referred to as "IMU", rigidly mounted with respect to the object;
determining a value, hereinafter referred to as "autocorrelation function minimum's lag value", representing a lag at which an autocorrelation function of the acquired inertial data is minimum; and
determining whether the object is in a liquid-surface-wave-influenced environment based on the autocorrelation function minimum's lag value.

14. Vehicle comprising a system (1200) according to claim 13, the vehicle being preferably at least one of: a motor vehicle, a car, an automobile, a van, a truck, a tanker, a bus, a train, a motorcycle, a tractor, an agricultural equipment, an agricultural tractor, a combine harvester, a crop sprayer, a forestry equipment, a construction equipment, a grader, an excavator, an autonomous vehicle, a self-driving vehicle, a driverless vehicle, a robotic vehicle, a highly automated vehicle, and a partially automated vehicle.

15. Computer program, or set of computer programs, comprising computer- and/or machine-readable instructions configured, when executed on a system (1200) according to claim 13, to cause the system (1200) to carry out the operations that the system (1200) is configured to carry out.

16. Computer program product or storage mediums comprise a computer program, or set of computer programs, according to claim 15.

## Amended claims

### Amended claims in accordance with Rule 137(2) EPC.

1. Method for determining whether an object is in a liquid-surface-wave-influenced environment, the method comprising:
acquiring (s10) measurement data, hereinafter referred to as "inertial data", from an inertial measurement unit, hereinafter referred to as "IMU", rigidly mounted with respect to the object;
determining (s20) a value, hereinafter referred to as "autocorrelation function minimum's lag value", representing a time lag at which an autocorrelation function of the acquired inertial data is minimum; and
determining (s30) whether the object is in a liquid-surface-wave-influenced environment based on the autocorrelation function minimum's lag value.

2. Method of claim 1, wherein determining (s30) whether the object is in a liquid-surface-wave-influenced environment based on the autocorrelation function minimum's lag value comprises: determining (s30a) that the object is in a liquid-surface-wave-influenced environment based on the autocorrelation function minimum's lag value exceeding a threshold.

3. Method of claim 2, wherein the threshold corresponds to a value of n seconds, and *n* is a number greater than or equal to 1, preferably a number selected from the range from 1 to 1000.

4. Method of claim 1, wherein determining (s30) whether the object is in a liquid-surface-wave-influenced environment based on the autocorrelation function minimum's lag value comprises: determining (s30b) that the object is in a liquid-surface-wave-influenced environment based on a moving average of the autocorrelation function minimum's lag value over time exceeding a threshold.

5. Method of claim 1, wherein determining (s30) whether the object is in a liquid-surface-wave-influenced environment based on the autocorrelation function minimum's lag value comprises: determining (s30c) that the object is in a liquid-surface-wave-influenced environment based on
a moving average of the autocorrelation function minimum's lag value over time exceeding a first threshold, and
a moving standard deviation of the autocorrelation function minimum's lag value over time not exceeding a second threshold.

6. Method according to any one of claims 2 to 5, further comprising:
determining (s40) that the object has entered a liquid-surface-wave-influenced environment based on the following conditions being fulfilled:
the object has been determined to be in a liquid-surface-wave-influenced environment for a minimum period of m seconds, wherein m is a number selected within the range from 8 to 20; and
no distance measurement instrument signal has been detected during the period of m seconds.

7. Method according to any one of claims 2 to 6, further comprising:
determining (s50) that the object has exited a liquid-surface-wave-influenced environment based on the following condition being fulfilled: a distance measurement instrument signal has been detected.

8. Method of claim 6 or 7, wherein the distance measurement instrument signal is, or comprises, at least one of:
a tachometer signal, and
a delta distance measurement signal from a camera.

9. Method according to any one of the preceding claims, wherein the object is one of:
a land vehicle;
an object that can be carried by a land vehicle; and
an object that can be pulled by a land vehicle.

10. Method according to any one of the preceding claims, wherein the liquid-surface-wave-influenced environment is a water-surface-wave-influenced environment, which, preferably, is at least one of: a ship and a floating bridge, and, more preferably, is at least one of: a transport vessel, a ferry, a barge, and a water taxi.

11. Method according to any one of the preceding claims, wherein the acquired inertial data is stored in a ring buffer data structure.

12. Method according to any one of the preceding claims, further comprising, after determining that the object is in a liquid-surface-wave-influenced environment, refraining from carrying out and/or from initiating a sensor calibration process, wherein, preferably, refraining means refraining for a given period of time.

13. System (1200), comprising a device or a set of devices, for determining whether an object is in a liquid-surface-wave-influenced environment, the system (1200) being configured for:
acquiring measurement data, hereinafter referred to as "inertial data", from an inertial measurement unit, hereinafter referred to as "IMU", rigidly mounted with respect to the object;
determining a value, hereinafter referred to as "autocorrelation function minimum's lag value", representing a time lag at which an autocorrelation function of the acquired inertial data is minimum; and
determining whether the object is in a liquid-surface-wave-influenced environment based on the autocorrelation function minimum's lag value.

14. Vehicle comprising a system (1200) according to claim 13, the vehicle being preferably at least one of: a motor vehicle, a car, an automobile, a van, a truck, a tanker, a bus, a train, a motorcycle, a tractor, an agricultural equipment, an agricultural tractor, a combine harvester, a crop sprayer, a forestry equipment, a construction equipment, a grader, an excavator, an autonomous vehicle, a selfdriving vehicle, a driverless vehicle, a robotic vehicle, a highly automated vehicle, and a partially automated vehicle.

15. Computer program, or set of computer programs, comprising computer- and/or machine-readable instructions configured, when executed on a system (1200) according to claim 13, to cause the system (1200) to carry out the operations that the system (1200) is configured to carry out.

16. Computer program product or storage mediums comprise a computer program, or set of computer programs, according to claim 15.
